# EUROPEAN PATENT APPLICATION

(11) **EP 4 159 311 A1**
(43) Date of publication of application: **05.04.2023**
(21) Application number: 21814448.3
(22) Date of filing: 27.01.2021
(51) Int. Cl.: B01J 23/10, B01J 23/46, B01J 37/02, B01J 37/03, B01J 37/16, C01B 3/04

(54) **AMMONIA CRACKING CATALYST, AND METHOD OF CRACKING AMMONIA AND GENERATING HYDROGEN BY USING SAME**

(30) Priority: 28.05.2020 KR 20200064068
(71) Applicant: Korea Research Institute of Chemical Technology, Daejeon 34114 (KR)
(72) Inventor: CHAE, Ho Jeong, Daejeon 34114 (KR); KIM, Youngmin, Daejeon 34114 (KR); AN, Lethien, Daejeon 34114 (KR); KIM, Jeong-Rang, Daejeon 34114 (KR); KIM, Tae Wan, Daejeon 34114 (KR); LEE, Youjin, Daejeon 34114 (KR); LEE, Su Un, Daejeon 34114 (KR)
(74) Representative: Germain Maureau
(86) International application number: PCT/KR2021/001089
(87) International publication number: WO 2021/241841

(57) **Abstract**

The present invention relates to an ammonia decomposition catalyst that converts ammonia into hydrogen and nitrogen. The catalyst includes ruthenium (Ru) as an active catalytic component and a composite oxide solid solution (LaₓCe₁₋ₓO_{y}) including lanthanum oxide and cerium oxide as a catalyst support. The present invention also relates to an ammonia decomposition method using the catalyst and a hydrogen production method using the catalyst.

## Description

### Technical Field

The present invention relates to an ammonia decomposition catalyst, an ammonia decomposition method using the same catalyst, and a hydrogen production method using the same catalyst. More particularly, the present invention relates to a catalyst increasing an ammonia conversion rate in a reaction of decomposing ammonia into nitrogen and hydrogen in a relatively low temperature range and to ammonia decomposition and hydrogen production methods using the same catalyst.

### Background Art

One way to efficiently store and transport hydrogen is to use ammonia as a source of hydrogen. Since the process of decomposing ammonia into hydrogen and nitrogen is an endothermic process, energy is required to obtain the products. Existing catalytic decomposition reactions require a considerable amount of heat to obtain a reasonable amount of hydrogen gas, and thus cost a lot of money to produce hydrogen.

2NH₃ → 3H₂ + N₂ (endothermic reaction) ... (1)

Ammonia decomposition catalysts are catalysts used to decompose ammonia into nitrogen and hydrogen. There has been a problem that remarkably high reaction temperatures are required to obtain high-purity hydrogen using the existing ammonia decomposition catalysts.

The present invention accordingly proposes a novel ammonia decomposition catalyst enabling a high ammonia conversion rate in a reaction of converting ammonia into nitrogen and hydrogen even at relatively low temperatures.

European Patent Application Publication No. EP 2612706 A1 (date of publication: July 10, 2013), which is one related art, relates to ammonia oxidation/decomposition catalysts. More particularly, the document relates to catalysts that can reduce a hydrogen production cost by using heat generated from an ammonia oxidation reaction for an ammonia decomposition reaction. The catalyst comprises ruthenium, which is one of novel metals, as an active catalytic material, and lanthanum oxide and/or cerium oxide as a catalyst support.

Japanese Patent Application Publication No. JP 2011-224556 A (date of publication: November 10, 2011) relates to a catalyst for ammonia decomposition and a method of producing hydrogen using the catalyst. More particularly, the document relates to a catalyst capable of exhibiting high activity in an ammonia decomposition reaction and of efficiently decomposing ammonia into hydrogen and nitrogen. The catalyst comprises a Group 8 metal to which ruthenium belongs as a catalytic component and a lanthanum oxide and/or cerium oxide as a component of a catalyst support.

EP 2612706 A1 and JP 2011-224556 A, which are related arts, appear to be similar to the present invention in that the catalysts use ruthenium as an active catalytic metal and comprise one or more of metal oxides such as lanthanum oxide and cerium oxide as a catalyst support. However, the present invention and the related art documents differ in that the catalyst of the present invention uses a lanthanum-cerium composite oxide as a catalyst support in view of the fact that when both lanthanum oxide and cerium oxide among metal oxides are used for a catalyst support, there is an effect of improving an ammonia decomposition rate at low temperatures, while the related documents, EP 2612706 A1 and JP 2011-224556 A, disclose that the catalyst support include one or more metal oxides among the well-known metal oxides and never specifically disclose a catalyst support comprising both lanthanum oxide and cerium oxide and the effect achieved by the catalyst support comprising both lanthanum oxide and cerium oxide.

Japanese Patent Application Publication No. JP 2010-094668 A (date of publication: April 30, 2010) relates to an ammonia decomposition catalyst, a preparation method thereof, and an ammonia processing method. More specifically, the document discloses a technology relating to an ammonia decomposition catalyst for decomposing ammonia into nitrogen and hydrogen, in which an active catalytic component comprises a ferrous metal cobalt and/or nickel and at least one metal oxide of CeZrOₓ, CeYOₓ, and CeLaOₓ.

Although the related art document "JP 2010-094668 A" appears to have some similarities to the present invention in that the related art includes a technique for an ammonia decomposition catalyst that uses an composite oxide of lanthanum oxide and cerium oxide as a catalyst support, the related art differs from the present invention in that the catalyst of the related art uses cobalt, which is an iron group metal, as an active catalytic component while the catalyst of the present invention uses ruthenium, which is one of platinum-based metals. In the point that the Ru/LaCeOₓ catalyst made by supporting ruthenium onto a composite oxide support of lanthanum oxide and cerium oxide exhibits a relatively high ammonia conversion rate compared to the case where other supports such as zirconia or CeZrOₓ are used, the details of the technology of the present invention contradicts to the experimental data in the related art document. Accordingly, the present invention is far beyond the level of technicality that can be derived from the techniques of the related art documents.

### Disclosure

### Technical Problem

The present invention has been made to solve the problems occurring in the related arts, and an objective of the present invention is to provide an ammonia decomposition catalyst exhibiting a relatively high ammonia conversion rate at low temperatures compared to conventional ammonia decomposition catalysts by containing ruthenium, which is a platinum-based metal, as an active catalytic component and an composite oxide solid solution containing lanthanum oxide and cerium oxide as a catalyst support.

Another objective of the present invention is to provide a technique relating to the compositional ratio of lanthanum and cerium in a catalyst support for a catalyst for significantly increasing an ammonia conversion rate at low temperatures, the catalyst using ruthenium, which is a platinum-based metal, as an active catalytic component, and a composite oxide including lanthanum oxide and cerium oxide as a catalyst support.

A further objective of the present invention is to provide an ammonia decomposition method using such an ammonia decomposition catalyst and a hydrogen production method using such an ammonia decomposition catalyst.

### Technical Solution

An ammonia decomposition catalyst for converting ammonia into hydrogen and nitrogen, according to one embodiment of the present invention, is characterized in that the ammonia decomposition catalyst includes ruthenium (Ru) as an active catalytic component and a composite oxide solution including lanthanum oxide and cerium oxide as a catalyst support.

In addition, in the ammonia decomposition catalyst according to one embodiment of the present invention, a molar ratio of lanthanum (La) to cerium (Ce) in the catalyst support is represented by Formula 1 in which x is in a range of 0.25 or more and 0.45 or less, and y is in a range of 1.78 to 1.88.

[Formula 1] LaₓCe₁₋ₓO_{y}

In addition, in the ammonia decomposition catalyst according to one embodiment of the present invention, x in Formula 1 is 0.33.

In addition, the ammonia decomposition catalyst according to one embodiment of the present invention comprises at least one selected from among Mg, Y, Ba, La, and Ce as a co-catalyst.

Further, according to one embodiment of the present invention, there is provided a method of preparing an ammonia decomposition catalyst for converting ammonia into hydrogen and nitrogen, the method comprising: mixing a cerium precursor and a lanthanum precursor in distilled water and stirring to form a cerium lanthanum aqueous solution; a primarily drying step of adding dropwise aqueous ammonia to the cerium lanthanum aqueous solution to produce a precipitate, collecting the precipitate produced through filtering, washing the precipitate, and drying the precipitate in a vacuum oven; preparing a lanthanum cerium composite oxide solid solution by co-precipitation of the cerium precursor and the lanthanum precursor by crushing the primarily dried precipitate and heating the crushed primarily dried precipitate in a heating furnace; adding the lanthanum cerium composite oxide solid solution to distilled water and stirring to prepare a ruthenium-added aqueous solution; a secondary drying step of adding dropwise aqueous ammonia to the ruthenium-added solution to produce a precipitate, filtering the resulting precipitate, and drying the resulting precipitate in a vacuum oven; and preparing a catalyst in which ruthenium is supported on the lanthanum cerium composite oxide solid solution by crushing the dried precipitate from in the secondary drying step and heating the crushed secondarily dried precipitate in a reducing atmosphere.

In addition, in the method of preparing an ammonia decomposition catalyst according to one embodiment of the present invention, a molar ratio of lanthanum (La) to cerium (Ce) may be in a range of 0.25:0.75 to 0.45:0.55.

According to one embodiment of the present invention, there is provided an ammonia decomposition method of converting ammonia into nitrogen and hydrogen, the method including: supplying an ammonia-containing gas into a reactor charged with the ammonia decomposition catalyst described above or an ammonia decomposition catalyst prepared by the ammonia decomposition catalyst preparation method; and controlling a temperature of the reactor supplied with the ammonia-containing gas to be in a range of 300°C to 600°C.

According to one embodiment of the present invention, there is provided a hydrogen production method of producing hydrogen by converting ammonia into nitrogen and hydrogen, the method including: supplying an ammonia-containing gas to a reactor charged with the ammonia decomposition catalyst described above or an ammonia decomposition catalyst prepared by the ammonia decomposition catalyst preparation method; controlling a temperature of the reactor supplied with the ammonia-containing gas to be in a range of 300°C to 600°C; and separating hydrogen from a gas discharged from the reactor.

### Advantageous Effects

The present invention relates to a catalyst for decomposing ammonia into nitrogen and hydrogen through a catalytic reaction. The catalyst comprises ruthenium, which is a platinum-based metal, as an active catalytic component, and a composite oxide solid solution including lanthanum oxide and cerium oxide as a catalyst support. Therefore, the catalyst enables a high ammonia conversion rate even in a relatively low temperature range of 350°C to 450°C. Accordingly, it is possible to process ammonia at low cost and produce high-concentration hydrogen at low cost.

In addition, in the ammonia decomposition catalyst according to the present invention, by making the catalyst support has a predetermined composition ratio of lanthanum and cerium, it is possible to significantly improve the ammonia conversion rate at low temperatures.

### Description of Drawings

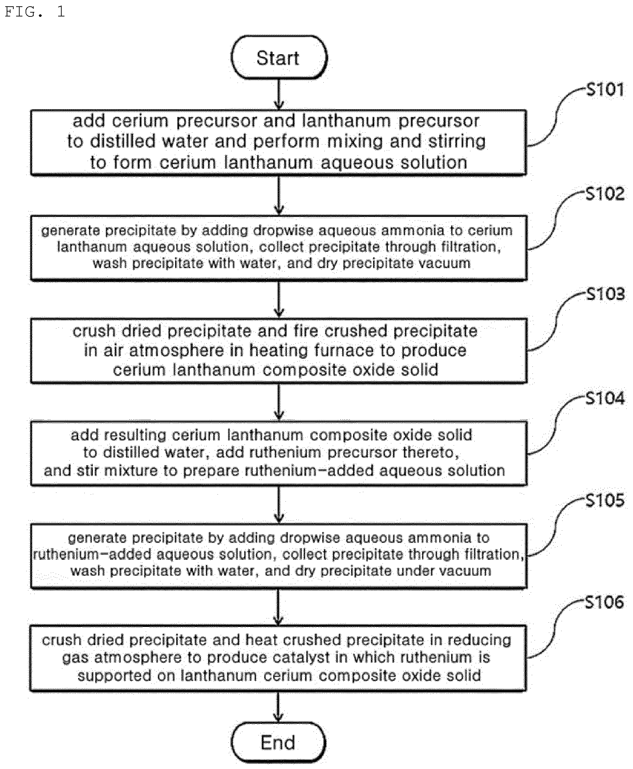

FIG. 1 is a flowchart illustrating an ammonia decomposition catalyst preparation method according to one embodiment of the present invention.

### Best Mode

Hereinafter, an ammonia decomposition catalyst according to one embodiment of the present invention, and ammonia decomposition and hydrogen production methods using the same will be described in detail.

The ammonia decomposition catalyst according to the present invention includes ruthenium (Ru) as an active catalytic component and a composite oxide solid solution including lanthanum oxide and cerium oxide as a catalytic support. The ammonia decomposition catalyst is a catalyst that converts ammonia into nitrogen and hydrogen through an endothermal reaction. The ammonia decomposition catalyst according to the present invention significantly exhibits a significantly improved ammonia conversion rate over conventional ammonia decomposition catalysts in a temperature range of 400°C or less this is the range in which an ammonia conversion rate is relatively low. That is, the ammonia decomposition catalyst according to the present invention has a form in which ruthenium (Ru) is supported on lanthanum cerium oxide (LaCeOₓ).

In addition, the ammonia decomposition catalyst according to the present invention exhibits varying ammonia conversion rates in a low temperature zone, depending on the molar ratio of lanthanum (La) and cerium (Ce) in the lanthanum cerium oxide serving as the catalyst support. The catalyst support of the ammonia decomposition catalyst according to the present invention can be represented by Formula 1 below. In Formula 1, x is preferably in a range of greater than 0.2 and less than 0.5, x is more preferably in a range of 0.25 or greater and 0.45 or less, and x is most preferably 0.33. In this case, y is in a range of 1.75 to 1.90.

[Formula 1] LaₓCe₁₋ₓO_{y}

The ammonia decomposition catalyst according to the present invention may further include co-catalytic components to further improve the ammonia decomposition rate. The co-catalytic components include preferably at least one element selected from alkali metal elements, alkaline earth metal elements, and lanthanoids, and include more preferably Mg, Y, Ba, La, Ce.

A method of preparing an ammonia decomposition catalyst, according to the present invention, will be described below.

A lanthanum cerium oxide (LaCeOₓ) used in the ammonia decomposition catalyst preparation method is obtained by mixing a precursor of lanthanum oxide (La₂O₃) and a precursor of cerium oxide (CeO₂), obtaining hydroxide by using ammonia as a precipitating agent, and oxidizing the hydroxide in an air atmosphere.

The precursors of lanthanum oxide and cerium oxide may be any one or more of oxides, chlorides, hydroxides, bromides, iodides, nitrates, sulfates, carbonates, acetates, oxalates, fluorides, isopropoxides, and organometallic deposits of lanthanum and cerium.

Hereinafter, an exemplary ammonia decomposition catalyst preparation method of the present invention will be described, but the ammonia decomposition catalyst preparation method of the present invention is not limited thereto, and any method which makes it possible to achieve the objectives of the present invention can be used.

FIG. 1 is a flowchart illustrating an ammonia decomposition catalyst preparation method according to one embodiment of the present invention.

As illustrated in FIG. 1, an ammonia decomposition catalyst preparation method of the present invention first mixes a cerium precursor and a lanthanum precursor in distilled water and stirs the mixture to prepare a cerium lanthanum aqueous solution (S101).

Aqueous ammonia is added dropwise to the cerium lanthanum aqueous solution to produce a precipitate, the precipitate is collected through a filtering process and washed, and the washed precipitate is dried in a vacuum oven (S102).

Next, the dried precipitate is crushed and fired in an air atmosphere in a heating furnace to produce a lanthanum cerium composite oxide solid solution (S103).

Next, the resulting lanthanum cerium oxide solid (composite oxide) is added to distilled water, a ruthenium precursor is added thereto and stirred to prepare an aqueous solution containing ruthenium (S104).

Aqueous ammonia is added dropwise to the ruthenium-added aqueous solution to produce a precipitate, the precipitate is collected through a filtering process and washed, and the washed precipitate is dried in a vacuum oven (S105).

Finally, the dry precipitate is crushed and reduced in a reducing gas atmosphere to produce a catalyst in which ruthenium is supported on a lanthanum cerium composite oxide solid solution (S106).

The firing of S103 in the preparation method may be performed at a temperature in a range of 300°C to 700°C and preferably 400°C to 600°C or 0.5 to 12 hours and preferably for 1 to 5 hours.

In the preparation method, the reduction treatment is not particularly limited if it is possible to form a ruthenium metal by reducing a ruthenium compound. Specifically, for example, a method of using a reductive gas such as carbon monoxide, hydrocarbons, or hydrogen, a method of adding a reducing agent such as hydrazine, lithium aluminum hydride, or tetramethyl borohydride may be used. In addition, when the reductive gas is used, the reductive gas may be diluted with other gases (for example, nitrogen carbon dioxide, or the like). Among these methods, a reduction treatment using hydrogen as a reductive gas is preferred.

In addition, when the reductive gas is used, heating is performed preferably at a temperature in a range of 300°C to 800°C and more preferably at a temperature in a range of 400°C to 600°C. The time for the reduction treatment is preferably in a range of 0.5 to 5 hours and more preferably in a range of 1 to 3 hours. In addition, prior to the reduction treatment using the reductive gas, a preliminary firing process may be performed using an inert gas such as nitrogen or carbon dioxide at a temperature in a range of 200°C to 400°C for 1 to 7 hours.

In the case where the reduction treatment is performed, the ruthenium compound is converted, principally, to a ruthenium metal exhibiting a metal state with a valence of 0. When the reduction treatment is insufficiently performed, the ruthenium compound is only partially reduced, resulting in the catalyst exhibiting low activity. However, in this case, in order for the ruthenium compound to enter a reduced state as hydrogen is generated by the ammonia decomposition reaction, the reduction treatment of the remaining portion that has not yet been reduced proceeds and the valence state of the ruthenium becomes zero, resulting in the catalyst exhibiting high activity.

In addition, an ammonia decomposition method according to another embodiment of the present invention features that the method produces hydrogen by decomposing ammonia into nitrogen and hydrogen by processing an ammonia-containing gas using the ammonia decomposition catalyst according to the present invention described above.

More particularly, the method includes: feeding an ammonia-containing gas into a reactor charged with an ammonia decomposition catalyst; and controlling the temperature of the reactor to which the ammonia-containing gas is fed to be in a range of 300°C to 600°C.

The ammonia-containing gas which is to be processed is not particularly limited. That is, ammonia gas, gases containing ammonia, and gases containing materials, such as urea, generating ammonia through pyrolysis may be regarded as the ammonia-containing gas to be processed.

In addition, gases containing ammonia may contain other substances to the extent that they are not toxic to the catalyst.

The reaction temperature is preferably in a range of 300°C and 600°C. The reaction pressure is in a range of 0.002 to 2 MPa as the absolute pressure, and more preferably in a range of 0.004 to 1 MPa.

In the ammonia decomposition method of the present invention, it is possible to obtain high-purity hydrogen by separating nitrogen and hydrogen obtained by decomposing ammonia from each other by conventional means.

Further, there is provided a hydrogen production method according to a further embodiment of the present invention.

More particularly, the method includes: feeding an ammonia-containing gas into a reactor charged with an ammonia decomposition catalyst; controlling the temperature of the reactor to which the ammonia-containing gas is fed to be in a range of 300°C to 600°C; and separating hydrogen from gas discharged from the reactor.

Hereinafter, the catalytic activity of the ammonia decomposition catalyst according to the present invention will be examined through examples. The following examples are provided to illustrate one or more preferred embodiments of the invention, but the invention is not limited to those embodiments. A number of changes may be made to the following examples without departing from the scope of the present invention.

### Example 1

7.57 g of cerium nitrate hydrate and 3.77 g of lanthanum nitrate hydrate were added to 100 mL of distilled water and the mixture was mixed and stirred to prepare a homogeneous aqueous solution. To this aqueous solution, 1 mole of aqueous ammonia was added dropwise until the pH value of the aqueous solution became 9 to produce a precipitate. The precipitate was collected through filtration, washed with water, placed in a vacuum oven, and dried at 110°C for 12 hours. This dry precipitate was crushed, placed in a firing machine, and treated at 500°C for 3 hours in an air atmosphere to obtain La_{0.33}Ce_{0.67}O_{1.84}. 1 g of the resulting support (i.e., La_{0.33}Ce_{0.67}O_{1.84}) for supporting 2% by weight of ruthenium (Ru) was added to 50 mL of distilled water, and 0.04 g of ruthenium chloride hydrate was added thereto and stirred. To this aqueous solution, 0.5 mole of aqueous ammonia was added dropwise until the pH value of the aqueous solution became 9 to produce a precipitate. The precipitate was collected through filtration, washed with water, placed in a vacuum oven, and dried at 110°C for 12 hours. This dry precipitate was crushed and treated at 500°C for 2 hours in a 100% hydrogen atmosphere to obtain Ru/La_{0.33}Ce_{0.67}O_{1.84}.

### Example 2

After dispersing 3 g of cerium oxide in 100 mL of distilled water, 1.89 g of lanthanum nitrate hydrate was added thereto and mixed. To this aqueous solution, 1 mole of aqueous ammonia was added dropwise until the pH value of the aqueous solution became 9 to produce a precipitate. The precipitate was collected through filtration, washed with water, placed in a vacuum oven, and dried at 110°C for 12 hours. This dry precipitate was ground, placed in a firing machine, and treated at 500°C for 3 hours in an air atmosphere to obtain La_{0.2}Ce_{0.8}O_{1.9}. 1 g of the resulting support (i.e., La_{0.2}Ce_{0.8}O_{1.9}) for supporting 2% by weight of ruthenium (Ru) was added to 50 mL of distilled water, and 0.04 g of ruthenium chloride hydrate was added thereto and stirred. To this aqueous solution, 0.5 mole of aqueous ammonia was added dropwise until the pH value of the aqueous solution became 9 to produce a precipitate. The precipitate was collected through filtration, washed with water, placed in a vacuum oven, and dried at 110°C for 12 hours. This dry precipitate was ground and treated at 500°C for 2 hours in a hydrogen 100% atmosphere to obtain Ru/La_{0.2}Ce_{0.8}O_{1.9}. The sample was denoted as Ru/La_{0.2}Ce_{0.8}O_{1.9}-DP.

### Example 3

3 g of cerium oxide was added to and mixed with an aqueous solution prepared by dissolving 1.89 g of lanthanum nitrate hydrate in 50 mL distilled water. The resulting solution was heated at 60°C with a rotation speed of 160 rpm for 4 hours using a rotary evaporation concentrator to remove water. The resulting powder was placed in a vacuum oven, dried at 110°C for 12 hours, placed in a firing machine, and treated at 500°C for 3 hours in an air atmosphere to obtain La_{0.2}Ce_{0.8}O_{1.9}. 2% by weight of ruthenium (Ru) was supported on the support in the same manner as in Example 2 to obtain Ru/La_{0.2}Ce_{0.8}O_{1.9}. The sample was denoted as Ru/La_{0.2}Ce_{0.8}O_{1.9}-WI.

### Example 4

7.57 g of cerium nitrate hydrate, 1.89 g of lanthanum nitrate hydrate, and 6.28 g of citric acid were added to 30 mL of isopropyl alcohol and mixed through stirring. The solution was stirred at 80°C until a yellow spongy gel formed. The gel was cooled to room temperature, then placed in a vacuum oven, and dried at 110°C for 12 hours. The dry gel was crushed and placed in a firing machine, and the temperature of the dry gel was gradually raised in an air atmosphere. The dry gel was then treated at 180°C for 2 hours, 300°C for 2 hours, and 500°C for 3 hours to obtain La_{0.2}Ce_{0.8}O_{1.9}. 2% by weight of ruthenium (Ru) was supported on the support in the same manner as in Example 2 to obtain Ru/La_{0.2}Ce_{0.8}O_{1.9}. The sample was denoted as Ru/La_{0.2}Ce_{0.8}O_{1.9}-SG.

### Example 5

7.85 g of urea was added to and mixed with an aqueous solution prepared by dissolving 1.89 g of lanthanum nitrate hydrate and 7.57 g of cerium nitrate hydrate in 100 mL of distilled water. The solution was refluxed with strong stirring at 100°C for 12 hours. The solution was filtered to collect the precipitate, and the precipitate was washed with water, placed in a vacuum oven, and dried at 110°C for 12 hours. This dry powder was crushed, placed in a firing machine, and treated at 500°C for 3 hours in an air atmosphere to obtain La_{0.2}Ce_{0.8}O_{1.9}. 2% by weight of ruthenium (Ru) was supported on the support in the same manner as in Example 2 to obtain Ru/La_{0.2}Ce_{0.8}O_{1.9}. The sample was denoted as Ru/La_{0.2}Ce_{0.8}O_{1.9}-UCP.

### Example 6

7.57 g of cerium nitrate hydrate and 1.89 g of lanthanum nitrate hydrate were added to and mixed in 100 mL of distilled water. To this aqueous solution, 1 mole of aqueous ammonia was added dropwise until the pH value of the aqueous solution became 9 to produce a precipitate. The precipitate was collected through filtration, washed with water, placed in a vacuum oven, and dried at 110°C for 12 hours. This dry precipitate was crushed, placed in a firing machine, and treated at 500°C for 3 hours in an air atmosphere to obtain La_{0.2}Ce_{0.8}O_{1.9}. 2% by weight of ruthenium (Ru) was supported on the support in the same manner as in Example 2 to obtain Ru/La_{0.2}Ce_{0.8}O_{1.9}. The sample was denoted as Ru/La_{0.2}Ce_{0.8}O_{1.9}-CP.

### Comparative Example 1

The same process as in Example 1 was performed except that 7.57 g of cerium nitrate hydrate was used instead of 7.57 g of cerium nitrate hydrate and 3.77 g of lanthanum nitrate hydrate to obtain Ru/CeO₂ as a catalyst.

### Comparative Example 2

The same process as in Example 1 was performed except that 7.57 g of lanthanum nitrate hydrate was used instead of 7.57 g of cerium nitrate hydrate and 3.77 g of lanthanum nitrate hydrate to obtain Ru/La₂O ₃ as a catalyst.

### Comparative Example 3

The same process was in Example 1 was performed except that 7.57 g of praseodymium nitrate hydrate was used instead of 7.57 g of cerium nitrate hydrate and 3.77 g of lanthanum nitrate hydrate to obtain Ru/Pr₂O₃ as a catalyst.

### Comparative Example 4

The same process as in Example 1 was performed except that t 3.79 g of praseodymium nitrate hydrate was used instead of 3.77 g of lanthanum nitrate hydrate to obtain Ru/Pr_{0.33}Ce_{0.67}O_{1.84} as a catalyst.

### Comparative Example 5

The same process as in Example 1 was performed except that 7.57 g of praseodymium nitrate hydrate was used instead of 7.57 g of cerium nitrate hydrate to obtain Ru/La_{0.33}Pr_{0.67}O_{1.5} as a catalyst.

### Comparative Example 6

The same process as in Example 1 was performed except that 2.28 g of barium nitrate hydrate was used instead of 3.77 g of lanthanum nitrate hydrate to obtain Ru/Ba_{0.33}Ce_{0.67}O_{1.67} as a catalyst.

### Comparative Example 7

The same process as in Example 1 was performed except that 7.57 g of zirconium nitrate hydrate was used instead of 7.57 g of cerium nitrate hydrate and 3.77 g of lanthanum nitrate hydrate to obtain Ru/ZrO₂ as a catalyst.

### Comparative Example 8

The same process as in Example 1 was performed except that 7.57 g of cerium nitrate hydrate and 1.16 g of zirconium nitrate hydrate were used instead of 7.57 g of cerium acid hydrate and 3.77 g of lanthanum nitrate hydrate to obtain Ru/Zr_{0.2}Ce_{0.8}O_{2.0} as a catalyst.

### Comparative Example 9

The same process as in Example 1 was performed except that 7.57 g of cerium nitrate hydrate and 7.57 g of magnesium nitrate hydrate were used instead of 3.77 g of lanthanum nitrate hydrate to obtain Ru/MgO as a catalyst.

### Experiment 1

To show that when ruthenium is an active catalytic component, the use of LaCeOₓ as a catalyst support improves an ammonia conversion rate compared to the case of using alumina, zirconia, lanthanum oxide, cerium oxide, or any composite oxide other than LaCeOₓ, experiments were performed in which ammonia decomposition reactions were performed at temperatures in a range of 300°C to 600°C using the catalysts of Example 1 and Comparative Examples 1 to 6. The results are shown in Table 1.

**[Table 1]**

| Catalyst | | Reaction Temperature (°C) | | | | | | |
|---|---|---|---|---|---|---|---|---|
| | | 300 | 350 | 400 | 450 | 500 | 550 | 600 |
| Example 1 | Ru/La_{0.33}Ce_{0.67}O_{1.84} | 17.5 | 53.4 | 91.9 | 100 | 100 | 100 | 100 |
| Example 2 | Ru/La_{0.2}Ce_{0.8}O_{1.9} | 13.8 | 42.8 | 83.4 | 99.6 | 100 | 100 | 100 |
| Comparative Example 1 | Ru/CeO₂ | 10.4 | 39.0 | 76.4 | 98.1 | 100 | 100 | 100 |
| Comparative Example 2 | Ru/La₂O₃ | 3.6 | 14.6 | 43.9 | 82.8 | 99.8 | 100 | 100 |
| Comparative Example 3 | Ru/Pr₂O₃ | 8.0 | 28.8 | 67.5 | 96.7 | 100 | 100 | 100 |
| Comparative Example 4 | Ru/Pr_{0.33}Ce_{0.67}O_{1.84} | 13.1 | 42.0 | 81.2 | 99.2 | 100 | 100 | 100 |
| Comparative Example 5 | Ru/La_{0.33}Pr_{0.67}O_{1.5} | 7.0 | 18.1 | 52.2 | 88.1 | 100 | 100 | 100 |
| Comparative Example 6 | Ru/Ba_{0.33}Ce_{0.67}O_{1.67} | 11.2 | 43.3 | 79.5 | 98.8 | 100 | 100 | 100 |
| Comparative Example 7 | Ru/ZrO₂ | 1.2 | 15.2 | 46.9 | 78.2 | 97.6 | 100 | 100 |
| Comparative Example 8 | Ru/Zr_{0.2}Ce_{0.8}O_{2.0} | 13.0 | 34.4 | 72.8 | 97.2 | 100 | 100 | 100 |
| Comparative Example 9 | Ru/MgO | 9.9 | 28.8 | 66.1 | 94.3 | 100 | 100 | 100 |

As shown in Table 1 above, the ammonia conversion rate varied depending on the material of the catalyst support. The catalyst supports exhibited ammonia conversion rates in this order: La_{0.33}Ce_{0.67}O_{1.84} > La_{0.2}Ce_{0.8}O_{1.9} > Pr_{0.33}Ce_{0.67}O_{1.84} > Zr_{0.2}Ce_{0.8}O_{2.0} > Ba_{0.33}Ce_{0.67}O_{1.67} > CeO₂ > MgO > Pr₂O₃ > La_{0.33}Pr_{0.67}O_{1.5} > La₂O₃ > ZrO₂ In particular, the Ru/La_{0.33}Ce_{0.67}O_{1.84} showed a relatively high ammonia conversion rate than the catalysts using the other supports in at experimental temperatures in a range of 450°C or less, which is a relatively low temperature range.

### Experiment 2

Experiments of ammonia decomposition reactions using the catalysts of Examples 2 to 6 were performed at various temperatures in a range of 300°C to 600°C. The results are shown in Table 2.

**[Table 2]**

| Catalyst | | Reaction Temperature (°C) | | | | | | |
|---|---|---|---|---|---|---|---|---|
| | | 300 | 350 | 400 | 450 | 500 | 550 | 600 |
| Example 2 | Ru/La_{0.2}Ce_{0.8}O_{1.9}-[DP] | 8.8 | 29.8 | 71.9 | 96.9 | 100 | 100 | 100 |
| Example 3 | Ru/La_{0.2}Ce_{0.8}O_{1.9}-[WI] | 9.7 | 31.5 | 72.3 | 98.0 | 100 | 100 | 100 |
| Example 4 | Ru/La_{0.2}Ce_{0.8}O_{1.9}-[SG] | 12.2 | 38.1 | 76.3 | 98.5 | 100 | 100 | 100 |
| Example 5 | Ru/La_{0.2}Ce_{0.8}O_{1.9}-[UCP] | 12.4 | 41.6 | 78.8 | 99.0 | 100 | 100 | 100 |
| Example 6 | Ru/La_{0.2}Ce_{0.8}O_{1.9}-[CP] | 13.8 | 42.8 | 83.4 | 99.6 | 100 | 100 | 100 |

As shown in Table 2 above, the ammonia conversion rate varied depending on the catalyst support preparation method even though the catalysts have the same composition. The catalyst supports prepared by the respective methods described above exhibited ammonia conversion rates in this order: La_{0.2}Ce_{0.8}O_{1.9}-[CP] > La_{0.2}Ce_{0.8}O_{1.9}-[UCP] > La_{0.2}Ce_{0.8}O_{1.9}-[SG] > La_{0.2}Ce_{0.8}O_{1.9}-[WI] > Ru/La_{0.2}Ce_{0.8}O_{1.9}-[DP] . In particular, the catalyst Ru/La_{0.2}Ce_{0.8}O_{1.9}-[CP] prepared by the method of Example 6 showed a higher ammonia conversion rate in the experimental temperature range of 450°C or less, which is a relatively low temperature range, than the catalysts using the supports prepared by other methods.

### Examples 7 to 19

By changing the contents of cerium nitrate hydrate and lanthanum nitrate hydrate from those in Example 1, Catalysts 7 to 19 represented by Ru/LaₓCe₁₋ₓO_{y} (X = 0.05, 0.09, 0.2, 0.25, 0.3, 0.33, 0.4, 0.5, 0.6, 0.7, 0.8, and 0.9) and shown in Table 3 was prepared.

### Comparative Example 10

2.04 g Ce(NO₃)₃.6H₂O (≥ 99%, Sigma) and 0.51 g La(NO₃)₃. 6H₂O (99.99%, Sigma) were dissolved in 50 mL of deionized water (DI) at room temperature for 30 minutes. Next, 0.04 g of RuCl₃.xH₂O (99.98%, Sigma) was added to the solution and stirred for 30 minutes. 0.5M NH₄OH prepared by diluting 16.3 mL of NH₄OH (28% to 30%, Samchun) in D.I water was added dropwise at a rate of 40 mL/h to 0.5 L of the final solution until the pH of the mixed solution reached ∼ 9.0. The suspension was stirred at room temperature for 12 hours then filtered to collect a precipitate. The precipitate was washed with DI water several times, dried in a vacuum oven at 110°C for 12 hours, and fired at 500°C for 3 hours at a ramp rate of 4°C/min to prepare Ru@La_{0.2}Ce_{0.8}O_{1.9} (by co-precipitation) .

### Comparative Example 11

0.81 g of CeO₂ and 0.19 g of La₂O₃ support (lab-made) were placed in 50 mL of DI water, and 0.04 g of RuCl₃.xH₂O (99.98%, Sigma) was added to the suspension. A 0.5M NH₄OH solution was added to the suspension to adjust the pH to 9, and the resulting suspension was aged at room temperature for 12 hours with stirring at 400 rpm. The resulting precipitate was collected through filtration and dried at 110°C for 12 hours to prepare Ru/(0.2)La₂O₃-(0.8)CeO₂ (by deposition-precipitation (DP)).

### Experiment 3

In order to observe the preparation methods of the final catalysts and the activity change according to the molar ratio of La and Ce, experiments of ammonia decomposition reactions using the catalysts of Examples 7 to 19 and the catalysts of Comparative Examples 1, 2, 10, and 11 were performed at various temperatures in a temperature range of 300°C to 600°C. The results are shown in Table 3.

**[Table 3]**

| Catalyst | | Reaction Temperature (°C) | | | | | | |
|---|---|---|---|---|---|---|---|---|
| | | 300 | 350 | 400 | 450 | 500 | 550 | 600 |
| Ru/La_{0.05}Ce_{0.95}O_{1.98} | Example 7 | 11.4 | 38.4 | 75.8 | 98.0 | 100 | 100 | 100 |
| Ru/La_{0.09}Ce_{0.91}O_{1.96} | Example 8 | 12.4 | 38.6 | 76.8 | 98.7 | 100 | 100 | 100 |
| Ru/La_{0.2}Ce_{0.8}O_{1.9} | Example 9 | 13.8 | 42.8 | 83.4 | 99.6 | 100 | 100 | 100 |
| Ru/La_{0.25}Ce_{0.75}O_{1.88} | Example 10 | 15.4 | 48.7 | 87.2 | 100 | 100 | 100 | 100 |
| Ru/La_{0.3}Ce_{0.7}O_{1.85} | Example 11 | 16.9 | 50.2 | 90.3 | 100 | 100 | 100 | 100 |
| Ru/La_{0.33}Ce_{0.67}O_{1.84} | Example 12 | 17.5 | 53.4 | 91.9 | 100 | 100 | 100 | 100 |
| Ru/La_{0.4}Ce_{0.6}O_{1.80} | Example 13 | 16.5 | 52.2 | 90.8 | 100 | 100 | 100 | 100 |
| Ru/La_{0.45}Ce_{0.55}O_{1.78} | Example 14 | 15.3 | 50.4 | 89.6 | 100 | 100 | 100 | 100 |
| Ru/La_{0.5}Ce_{0.5}O_{1.75} | Example 15 | 14.0 | 47.9 | 88.7 | 100 | 100 | 100 | 100 |
| Ru/La_{0.6}Ce_{0.4}O_{1.70} | Example 16 | 11.3 | 37.1 | 71.3 | 88.0 | 100 | 100 | 100 |
| Ru/La_{0.7}Ce_{0.3}O_{1.65} | Example 17 | 9.9 | 27.7 | 54.4 | 75.1 | 95.4 | 100 | 100 |
| Ru/La_{0.8}Ce_{0.2}O_{1.60} | Example 18 | 7.6 | 16.3 | 36.4 | 63.1 | 92.0 | 99.8 | 100 |
| Ru/La_{0.9}Ce_{0.1}O_{1.55} | Example 19 | 5.1 | 6.9 | 19.6 | 51.6 | 86.8 | 99.3 | 100 |
| Ru/CeO₂ | Comparative Example 1 | 10.4 | 39.0 | 76.4 | 98.1 | 100 | 100 | 100 |
| Ru/La₂O₃ | Comparative Example 2 | 3.6 | 14.6 | 43.9 | 82.8 | 99.8 | 100 | 100 |
| Ru@La_{0.2}Ce_{0.8}O_{1.9} | Comparative Example 10 | 4.3 | 14.3 | 48.3 | 81.7 | 98.4 | 100 | 100 |
| Ru/(0.2)La₂O₃-(0.8)CeO₂ | Comparative Example 11 | 9.4 | 35.5 | 75.3 | 98.1 | 100 | 100 | 100 |

As shown in Table 3 above, it was confirmed that the ammonia conversion rate depends on the molar ratio of La to Ce (Examples 7 to 19). The ammonia conversion rate increased as the content of La increased from 0.05 over the entire temperature range, resulting in the highest conversion when the molar ratio of La to Ce was 0.33:0.67, i.e., a ratio of La to Ce was 1:2. There was a tendency in which the ammonia conversion rate decreased rapidly as the content of La increased from 0.4 to 0.9, resulting in the lowest conversion when the molar ratio of La to Ce was 0.9:0.1. In particular, when the reaction temperature was 350°C and 400°C, in a certain range of the mixing ratios of La₂O₃ and CeO₂, a lower activity was exhibited than the case where either La₂O₃ alone or CeO₂ alone was used whereas in a different range of the mixing ratios, a higher activity was exhibited than the case where either La₂O₃ alone or CeO₂ alone was used. That is, it was confirmed that a different tendency than the effects of simple physical mixing ratios of La₂O₃ and CeO₂ was observed

It can be seen from these experiments that the Ru/LaCeOₓ catalyst has the optimal performance when the molar ratio of La to Ce is 1:2.

On the other hand, the ammonia conversion rate was higher when the LaCeOₓ solid was used as a support for Ru than when either La₂O₃ or CeO₂ was used alone or when La₂O₃ and CeO₂ were simply physically mixed (Comparative Example 11). In addition, it was shown that the catalysts prepared by co-precipitating the La precursor and the Ce precursor to prepare the support and then impregnating the support with Ru as in Examples exhibited a significantly higher ammonia conversion rate than the catalysts prepared by dissolving the Ru precursor, the La precursor, and the Ce precursor at the same time and co-precipitating the precursors, in a relatively low temperature range.

While the present disclosure has been described with reference to exemplary embodiments illustrated in the accompanying drawings, those skilled in the art will appreciate that the exemplary embodiments are presented only for illustrative purposes. On the contrary, it will be understood that various modifications and equivalents to the exemplary embodiments are possible. Accordingly, the technical scope of the present disclosure should be defined by the following claims.

## Claims

1. An ammonia decomposition catalyst for converting ammonia into hydrogen and nitrogen, the ammonia decomposition catalyst comprising:
ruthenium (Ru) as an active catalytic component, and
a composite oxide solid solution comprising lanthanum oxide and cerium oxide, as a catalyst support.

2. The ammonia decomposition catalyst of claim 1, wherein a molar ratio of lanthanum (La) to cerium (Ce) in the catalyst support is represented by Formula 1 in which x is in a range of 0.25 or more and 0.45 or less, and y is in a range of 1.78 to 1.88.
[Formula 1] LaₓCe₁₋ₓO_{y}

3. The ammonia decomposition catalyst of claim 2, wherein in Formula 1, x is 0.33.

4. The ammonia decomposition catalyst of claim 1, further comprising at least one selected from among Mg, Y, Ba, La, and Ce, as a co-catalyst.

5. A method of preparing an ammonia decomposition catalyst that converts ammonia into hydrogen and nitrogen, the method comprising:
mixing and stirring a cerium precursor and a lanthanum precursor in distilled water to form a cerium lanthanum aqueous solution;
a primary drying step including adding dropwise aqueous ammonia to the cerium lanthanum aqueous solution to produce a precipitate, collecting the precipitate through filtration, washing the precipitate with water, and drying the precipitate in a vacuum oven;
crushing the precipitate resulting from in the primary drying step and heating the crushed precipitate in a firing machine to prepare a lanthanum cerium composite oxide solid solution;
adding the lanthanum cerium composite oxide solid solution to distilled water, adding a ruthenium precursor thereto and stirring the mixture to prepare a ruthenium-added aqueous solution;
a secondary drying step including adding dropwise aqueous ammonia to the ruthenium-added aqueous solution to produce a precipitate, collecting the precipitate through filtration, washing the precipitate with water, and drying the precipitate in a vacuum oven; and
crushing the dried precipitate from in the secondary drying step and heating the crushed precipitate in a reducing atmosphere to prepare a catalyst in which ruthenium is supported on the lanthanum cerium composite oxide solid solution.

6. The method of claim 5, wherein a molar ratio of lanthanum (La) to cerium (Ce) is in a range of 0.25:0.75 to 0.45:0.55.

7. An ammonia decomposition method for converting ammonia into nitrogen and hydrogen, the method comprising: feeding an ammonia-containing gas into a reactor charged with the ammonia decomposition catalyst of any one of claims 1 to 4 or an ammonia decomposition catalyst prepared by the method of any one of claims 5 and 6; and controlling the internal temperature of the reactor supplied with the ammonia-containing gas to be in a range of 300°C and 600°C.

8. A hydrogen production method for producing hydrogen by converting ammonia into nitrogen and hydrogen, the method comprising:
feeding an ammonia-containing gas into a reactor charged with the ammonia decomposition catalyst of any one of claims 1 to 4 or an ammonia decomposition catalyst prepared by the method of any one of claims 5 and 6;
controlling the internal temperature of the reactor supplied with the ammonia-containing gas to a range of 300°C to 600°C; and
separating hydrogen from gas discharged from the reactor.
